# EUROPEAN PATENT APPLICATION

(11) **EP 4 166 838 A1**
(43) Date of publication of application: **19.04.2023**
(21) Application number: 21948688.3
(22) Date of filing: 30.12.2021
(51) Int. Cl.: F16M 11/08, F16M 11/04, F16M 11/06, G06F 1/16

(54) **ROTATION BASE AND ALL-IN-ONE APPARATUS**

(30) Priority: 06.09.2021 CN 202122143854 U
(71) Applicant: Qianhai Junda (Shenzhen) Equity Investment Co., Ltd., Shenzhen, Guangdong 518000 (CN)
(72) Inventor: LIAO, Zhuowen, Shenzhen, Guangdong 518000 (CN)
(74) Representative: Ipside
(86) International application number: PCT/CN2021/143384
(87) International publication number: WO 2023/029329

(57) **Abstract**

The present application discloses a rotating base (100), comprising a shell structure (10) and a rotating structure (20). The shell structure (10) is provided with a receiving cavity (112), and a rotating opening (16) in communication with the receiving cavity (112) is formed in the shell structure (10). The rotating structure (20) comprises a turntable (21) located at the rotating opening (16) and partially received in the receiving cavity (112), a fixed seat (23) connected to a bottom of the receiving cavity (112), and a rotating member (22) located in the receiving cavity (112). The rotating member (22) comprises a rotating sleeve (221) and an adapter disk (225) connected to the turntable (21). One end of the rotating sleeve (221) is rotationally connected to the fixed seat (23), and the other end of the rotating sleeve (221) is connected to the adapter disk (225). According to the present application, the rotating sleeve (221) is rotationally connected to the fixed seat (23), so that a small frictional force is produced in the process of rotation, and the process of rotation is thus simple and convenient.

## Description

The present application claims priority to Chinese patent application No. 202122143854.3, filed with the China National Intellectual Property Administration (CNIPA) on 06 September 2021 and entitled "ROTATING BASE AND ALL-IN-ONE DEVICE", which is incorporated herein by reference in its entirety.

### Technical Field

The present application relates to the technical field of computer accessories, and particularly to a rotating base and an all-in-one device.

### Background Art

The statements herein only provide background information related to the present application, and do not necessarily constitute the prior art.

At present, an all-in-one computer, as a new market product similar to a desktop computer and a notebook computer, is a new type of computer that integrates a host computer part and a display part. The innovative point of this product lies in its high degree of integration of internal elements. With the development of wireless technologies, a keyboard, a mouse and a display of the all-in-one computer can be connected wirelessly, and the all-in-one computer is provided with only one power cord. The all-in-one computer has the advantages of stylish appearance, lightness and exquisiteness, moderate price, good mobility, high portability and the like, and it saves more space than an ordinary desktop computer, and reduces the living cost.

A conventional all-in-one computer often needs to be equipped with a base by which the all-in-one computer can be appropriately raised up so as to obtain an appropriate height for use.

When the all-in-one computer is in use, it is often necessary to rotate the base and the all-in-one computer together by a certain angle if the content displayed on the all-in-one computer is to be shared with others. However, the process of rotation is troublesome because the all-in-one computer has a certain weight and a high friction.

### Technical Problem

One of the objectives of embodiments of the present application is to provide a rotating base and an all-in-one device, aiming at solving the problem of how to improve the convenience of rotating an all-in-one computer.

### Technical Solutions

In order to solve the above technical problem, the embodiments of the present application adopt the following technical solutions.

In a first aspect, a rotating base is provided, comprising:
a shell structure arranged horizontally and provided with a receiving cavity, wherein an upward surface of the shell structure is provided with a rotating opening in communication with the receiving cavity; and
a rotating structure comprising a turntable arranged at the rotating opening and partially received in the receiving cavity, a fixed seat connected to a bottom of the receiving cavity, and a rotating member located in the receiving cavity, wherein the rotating member comprises a rotating sleeve and an adapter disk connected to and stacked with the turntable, one end of the rotating sleeve is rotationally connected to the fixed seat, and the other end of the rotating sleeve is connected to the adapter disk.

In some embodiments, the adapter disk comprises a disk body connected to and stacked with the turntable, an adapter ring connected to the disk body, and an adapter plate located in the adapter ring and connected to the disk body, wherein an adapter hole is formed in the disk body corresponding to the adapter ring, a through hole is formed in the adapter plate corresponding to the adapter hole, and one end of the rotating sleeve passes through the through hole and is located in the adapter hole and connected to the adapter plate.

In some embodiments, at least one edge of the adapter plate is arranged in a non-linear manner, and the adapter ring has a shape matching that of the adapter plate.

In some embodiments, the rotating structure further comprises a locking nut located in the adapter hole, one end of the rotating sleeve is provided with an external thread, and the locking nut is screwed and locked to the rotating sleeve.

In some embodiments, the rotating structure further comprises a first washer fitted over the rotating sleeve, located between the locking nut and the adapter plate and made of a flexible material.

In some embodiments, the fixed seat comprises a fixed ring connected to the bottom of the receiving cavity and a fixed plate connected to a surface of the fixed ring, wherein the fixed plate is provided with a fixed hole, and the rotating sleeve is rotationally connected to the fixed hole.

In some embodiments, the rotating structure further comprises a second washer and a third washer each made of a flexible material, the third washer is located in the fixed ring, and the fixed plate is located between the second washer and the third washer.

In some embodiments, the rotating structure further comprises a damping column connected to an inner wall of the receiving cavity and a damping plate connected to the adapter disk, wherein a free end of the damping column is provided with a damping groove, and the damping plate rotates by a preset angle and is retained in the damping groove.

In some embodiments, the rotating structure further comprises a limiting plate connected to the bottom of the receiving cavity and an abutting plate connected to the adapter disk, and the limiting plate is located in a rotating path of the abutting plate and configured to limit a rotation of the abutting plate.

In some embodiments, a side surface of the shell structure is further provided with an access hole in communication with the receiving cavity, the rotating base further comprises a tray, and the tray is slidably inserted into the receiving cavity through the access hole.

In a second aspect, another objective of the present application is to provide an all-in-one device, comprising the rotating base as described above and a solid state drive located in the receiving cavity, wherein the upward surface of the turntable is further provided with a positioning cavity, and the all-in-one device further comprises a host computer with one end received in the positioning cavity.

In an embodiment, the positioning cavity has a square cross-section, and a backing plate is further arranged in the positioning cavity.

### Beneficial Effects

The rotating base provided in the embodiments of the present application has the following beneficial effects. By placing the host computer on the turntable and exerting a torque to the host computer, the turntable rotates by a preset angle with the host computer, and at the same time, the rotating sleeve also rotates by a preset angle relative to the fixed seat, such that a display orientation of the host computer is adjusted. In addition, since the rotating sleeve is rotationally connected to the fixed seat, a small frictional force is produced in the process of rotation, and the process of rotation is thus simple and convenient.

The all-in-one device provided in the embodiments of the present application has the following beneficial effects. By placing the host computer on the turntable and exerting a torque to the host computer, the turntable rotates by a preset angle with the host computer, and at the same time, the rotating sleeve also rotates by a preset angle relative to the fixed seat, such that a display orientation of the host computer is adjusted. In addition, since the rotating sleeve is rotationally connected to the fixed seat, a small frictional force is produced in the process of rotation, and the process of rotation is thus simple and convenient.

### Brief Description of the Drawings

In order to explain the technical solutions in the embodiments of the present application more clearly, the accompanying drawings to be used in the descriptions of the embodiments or exemplary technologies will be briefly introduced below. Obviously, the accompanying drawings described below are merely some embodiments of the present application, and a person of ordinary skill in the art would have obtained other drawings according to these drawings without involving any inventive effort.
FIG. 1 is a schematic perspective structural view of a rotating base provided in an embodiment of the present application;
FIG. 2 is a schematic cross-sectional view of the rotating base in FIG. 1;
FIG. 3 is a schematic exploded view of the rotating base in FIG. 1; and
FIG. 4 is a further schematic exploded view of the rotating base in FIG. 3.

### Implementations of the Invention

In order to make the objectives, technical solutions, and advantages of the present application clearer, the present application is described in further detail below with reference to the drawings and embodiments. It should be understood that the specific embodiments described herein are merely used to explain the present invention and are not intended to limit the present application.

It should be noted that when a component is referred to as being "fixed to" or "arranged at" another component, the component may be directly located on the another component or indirectly located on the another component. When a component is referred to as being "connected to" another component, the component may be directly or indirectly connected to the another component. The orientations or positional relationships indicated by the terms such as "upper", "lower", "left", and "right" are based on the orientations or positional relationships shown in the drawings, and are only for convenience of description, rather than indicating or implying that the apparatus or element referred to must have a specific orientation or be constructed and operated in a specific orientation, and therefore cannot be construed as limiting the present application. For a person of ordinary skill in the art, the specific meanings of the foregoing terms can be understood based on specific situations. The terms "first" and "second" are used for convenience of description only, and cannot be construed as indicating or implying relative importance or implicitly indicating the number of technical features. The term "a plurality of" means two or more, unless otherwise explicitly and specifically defined.

In order to explain the technical solutions described in the present application, a detailed description will be made below with reference to specific drawings and embodiments.

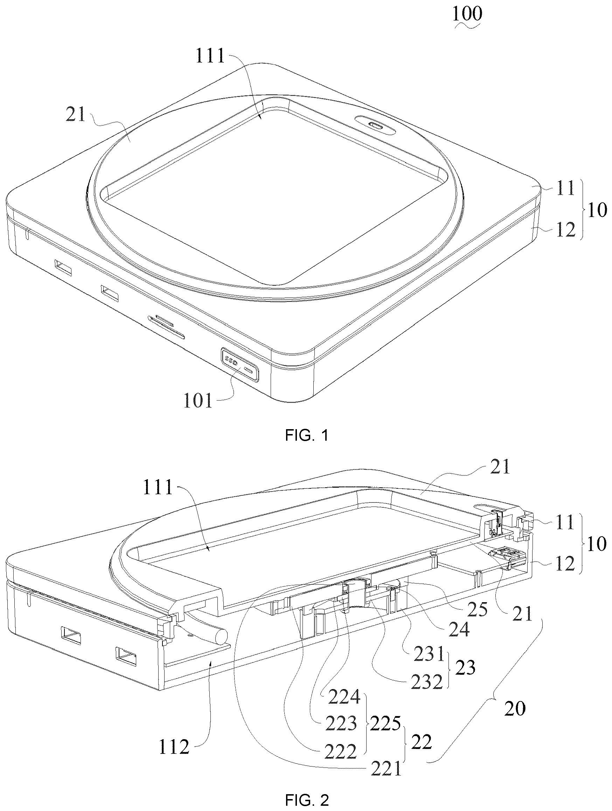

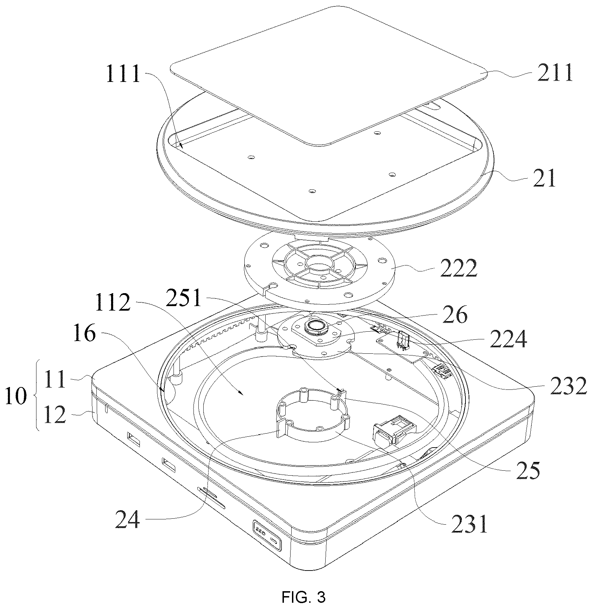

Referring to FIGS. 1 and 3, an embodiment of the present application provides a rotating base 100 configured to support a host computer. Optionally, the host computer is an all-in-one computer. The rotating base 100 comprises a shell structure 10 and a rotating structure 20. The shell structure 10 is arranged horizontally and provided with a receiving cavity 112. Optionally, the shell structure 10 comprises a lower shell 12 arranged horizontally and an upper shell 11 covering the lower shell 12. The upper shell 11 and the lower shell 12 are detachably connected to each other and together constitute the receiving cavity 112. An upward surface of the upper shell 11 is provided with a rotating opening 16, and the rotating opening 16 is in communication with the receiving cavity 112. Optionally, the rotating opening 16 is set to be circular. The rotating structure 20 comprises a turntable 1 arranged at the rotating opening 16 and partially received in the receiving cavity 112, a fixed seat 23 connected to the bottom of the receiving cavity 112, and a rotating member 22 located in the receiving cavity 112. The rotating member 22 comprises a rotating sleeve 221 and an adapter disk 225 connected to the turntable 21 and stacked with the turntable 21. One end of the rotating sleeve 221 is rotationally connected to the fixed seat 23, and the other end of the rotating sleeve 221 is connected to the adapter disk 225. Optionally, the adapter disk 225 is a circular disk and matches the rotating opening 16 in shape.

Referring to FIGS. 1 and 3, by placing the host computer on the turntable 21 and exerting a torque to the host computer, the turntable 21 rotates by a preset angle with the host computer, and at the same time, the rotating sleeve 221 also rotates by a preset angle relative to the fixed seat 23, such that a display orientation of the host computer is adjusted. In addition, since the rotating sleeve 221 is rotationally connected to the fixed seat 23, a small frictional force is produced in the process of rotation, and the process of rotation is thus simple and convenient.

In an embodiment, the adapter disk 225 comprises a disk body 222 connected to the turntable 1 and stacked with the turntable 1, an adapter ring 223 connected to the disk body 222, and an adapter plate 224 located in the adapter ring 223 and connected to the disk body 222. An adapter hole is formed in the disk body 222 corresponding to the adapter ring 223. A through hole is formed in the adapter plate 224 corresponding to the adapter hole. One end of the rotating sleeve 221 passes through the through hole and is located in the adapter hole and connected to the adapter plate 224. Optionally, the disk body 222 is connected to the turntable 1 via a screw. The turntable 1 drives the disk body 222 to rotate, and then the adapter plate 224 drives the rotating sleeve 221 to rotate.

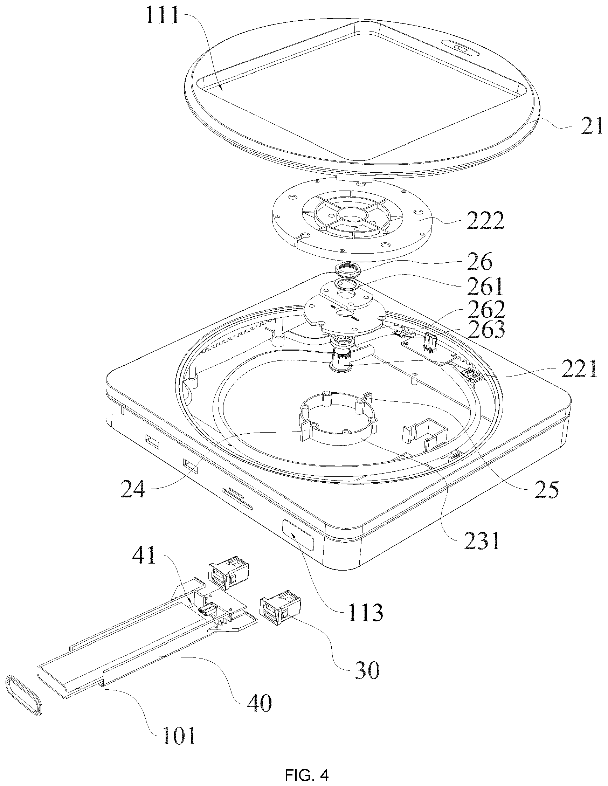

Referring to FIGS. 2 and 4, optionally, the adapter disk 225 may also be a bearing, i.e., the rotating sleeve 221 is connected to an inner race of the bearing, and the turntable 1 is connected to an outer race of the bearing, such that the turntable 1 rotates around the rotating sleeve 221.

In an embodiment, at least one edge of the adapter plate 224 is arranged in a non-linear manner. Optionally, a length edge of the adapter plate 224 is arranged in the form of a straight line, while a width edge of the adapter plate 224 is arranged in the form of an arc, and the shape of the adapter ring 223 matches that of the adapter plate 224, such that the adapter plate 224 rotates with the adapter ring 223, and the adapter ring 223 and the adapter plate 224 are prevented from rotating relative to each other.

Referring to FIGS. 2 and 4, in an embodiment, the rotating structure 20 further comprises a locking nut 26 located in the adapter hole, one end of the rotating sleeve 221 is provided with an external thread, and the locking nut 26 is screwed and locked to the rotating sleeve 221. The locking nut 26 may keep the rotating sleeve 221 and the adapter plate 224 securely connected to each other.

Referring to FIGS. 2 and 4, in an embodiment, the rotating structure 20 further comprises a first washer 261 fitted over the rotating sleeve 221, located between the locking nut 26 and the adapter plate 224 and made of a flexible material. Optionally, the first washer 261 has a transversely V-shaped cross-section, so that the locking nut 26 can be locked to the adapter plate 224. Optionally, the adapter plate 224 may also be connected to the disk body 222 via a screw.

Referring to FIGS. 2 and 4, in an embodiment, the fixed seat 23 comprises a fixed ring 231 connected to the bottom of the receiving cavity 112 and a fixed plate 232 connected to a surface of the fixed ring 231. The fixed plate 232 is provided with a fixed hole, and the rotating sleeve 221 is rotationally connected to the fixed hole, such that the rotating sleeve 221 can rotate relative to the fixed plate 232.

In an embodiment, the rotating structure 20 further comprises a damping column connected to an inner wall of the receiving cavity 112 and a damping plate 25 connected to the adapter disk 225. A free end of the damping column is provided with a damping groove 251. The damping plate 25 rotates by a preset angle and is retained in the damping groove 251. Optionally, edges on two sides of the damping groove 251 are arranged in the form of cambered surfaces, and an end surface of the free end abutting against the damping plate 25 is also arranged in the form of a convex cambered surface, so that the damping plate 25 can be retained into the damping groove 251 under the action of a preset torque and kept stable.

Referring to FIGS. 2 and 4, in an embodiment, the rotating structure 20 further comprises a limiting plate connected to the bottom of the receiving cavity 112 and an abutting plate 24 connected to the adapter disk 225, and the limiting plate is located in a rotating path of the abutting plate 24 and configured to limit a rotation of the abutting plate 24. Optionally, a maximum rotation angle of the turntable 1 is 350 degrees. The cooperation between the limiting plate and the abutting plate 24 may prevent the over-rotation of the turntable 1.

Referring to FIGS. 2 and 4, optionally, the limiting plate and the damping column are arranged opposite to each other, i.e., a free end of the abutting plate 24 abuts against a free end of the limiting plate when the damping plate 25 is retained into the damping groove 251.

In an embodiment, the end of the rotating sleeve 221 located in the fixed ring 231 is provided with a limiting ring in a protruding manner, and the limiting ring is fitted over the rotating sleeve 221 and slidably abuts against the fixed plate 232. Optionally, by providing the limiting ring, it is possible to prevent the rotating sleeve 221 from separating from the fixed plate 232, and also to enable the rotating sleeve 221 to rotate freely.

Referring to FIGS. 2 and 4, in an embodiment, the rotating structure 20 further comprises a second washer 262 and a third washer 263 each made of a flexible material. The third washer 263 is located in the fixed ring 231, and the fixed plate 232 is located between the second washer 262 and the third washer 263. By providing the second washer 262 and the third washer 263, there is a certain damping in the process of rotation of the rotating sleeve 221, so that the turntable 1 can keep its position stable after rotating by a preset angle.

Referring to FIGS. 2 and 4, in an embodiment, a side surface of the shell structure 10 is further provided with an access hole 113 in communication with the receiving cavity 112, the rotating base 100 further comprises a tray 40, and the tray 40 is slidably inserted into the receiving cavity 112 through the access hole 113. Optionally, a self-locking fastener 30 is further arranged in the receiving cavity 112, the tray 40 is inserted into the receiving cavity 112 and connected to the self-locking fastener 30 in a snap-fit manner, and the tray 40 is fixed by the self-locking fastener 30, such that the convenience in replacing and repairing a solid state drive 101 is improved.

Optionally, the tray 40 is provided with an accommodating groove 41.

Referring to FIGS. 2 and 4, the present application further provides an all-in-one device. The all-in-one device comprises the rotating base 100. A reference may be made to the above embodiments for the specific structure of the rotating base 100. The all-in-one device which uses all the technical solutions of all the above embodiments also has all the beneficial effects brought by the technical solutions of the above embodiments, which will not be repeated described in detail herein.

In an embodiment, the all-in-one device further comprises a host computer and a solid state drive 101 located in the accommodating groove 41, and the solid state drive 101 is electrically connected to the host computer. The upward surface of the turntable 1 is further provided with a positioning cavity 111, and one end of the host computer is received in the positioning cavity 111.

Referring to FIGS. 2 and 4, optionally, the positioning cavity 111 has a square cross-section, and a backing plate 211 is further arranged in the positioning cavity 111.

By exerting a torque to the host computer, the turntable 1 may be driven to rotate by a preset angle.

Optionally, the host computer is an iMac.

The foregoing description is merely illustrative of the optional embodiments of the present application, and is not intended to limit the present application. Various changes and variations may be made to the present application for a person skilled in the art. Any modification, equivalent replacement, improvement, and the like made within the spirit and principles of the present application should fall within the scope of protection of the present application.

## Claims

1. A rotating base, **characterized by** comprising:
a shell structure arranged horizontally and provided with a receiving cavity, wherein an upward surface of the shell structure is provided with a rotating opening in communication with the receiving cavity; and
a rotating structure comprising a turntable arranged at the rotating opening and partially received in the receiving cavity, a fixed seat connected to a bottom of the receiving cavity, and
a rotating member located in the receiving cavity, wherein the rotating member comprises a rotating sleeve and an adapter disk connected to and stacked with the turntable, one end of the rotating sleeve is rotationally connected to the fixed seat, and the other end of the rotating sleeve is connected to the adapter disk.

2. The rotating base according to claim 1, **characterized in that** the adapter disk comprises a disk body connected to and stacked with the turntable, an adapter ring connected to the disk body, and an adapter plate located in the adapter ring and connected to the disk body, wherein an adapter hole is formed in the disk body corresponding to the adapter ring, a through hole is formed in the adapter plate corresponding to the adapter hole, and one end of the rotating sleeve passes through the through hole and is located in the adapter hole and connected to the adapter plate.

3. The rotating base according to claim 2, **characterized in that** at least one edge of the adapter plate is arranged in a non-linear manner, and the adapter ring has a shape matching that of the adapter plate.

4. The rotating base according to claim 2, **characterized in that** the rotating structure further comprises a locking nut located in the adapter hole, one end of the rotating sleeve is provided with an external thread, and the locking nut is screwed and locked to the rotating sleeve.

5. The rotating base according to claim 4, **characterized in that** the rotating structure further comprises a first washer fitted over the rotating sleeve, located between the locking nut and the adapter plate and made of a flexible material.

6. The rotating base according to any one of claims 1-5, **characterized in that** the fixed seat comprises a fixed ring connected to the bottom of the receiving cavity and a fixed plate connected to a surface of the fixed ring, wherein the fixed plate is provided with a fixed hole, and the rotating sleeve is rotationally connected to the fixed hole.

7. The rotating base according to claim 6, **characterized in that** the rotating structure further comprises a second washer and a third washer each made of a flexible material, the third washer is located in the fixed ring, and the fixed plate is located between the second washer and the third washer.

8. The rotating base according to any one of claims 1-5, **characterized in that** the rotating structure further comprises a damping column connected to an inner wall of the receiving cavity and a damping plate connected to the adapter disk, wherein a free end of the damping column is provided with a damping groove, and the damping plate rotates by a preset angle and is retained in the damping groove.

9. The rotating base according to any one of claims 1-5, **characterized in that** the rotating structure further comprises a limiting plate connected to the bottom of the receiving cavity and an abutting plate connected to the adapter disk, and the limiting plate is located in a rotating path of the abutting plate and configured to limit a rotation of the abutting plate.

10. The rotating base according to any one of claims 1-5, **characterized in that** a side surface of the shell structure is further provided with an access hole in communication with the receiving cavity, the rotating base further comprises a tray, and the tray is slidably inserted into the receiving cavity through the access hole.

11. An all-in-one device, **characterized by** comprising the rotating base of any one of claims 1-10 and a solid state drive located in the receiving cavity, wherein the upward surface of the turntable is further provided with a positioning cavity, and the all-in-one device further comprises a host computer with one end received in the positioning cavity.

12. The all-in-one device according to claim 11, **characterized in that** the positioning cavity has a square cross-section, and a backing plate is further arranged in the positioning cavity.
